# FASCICULE DE BREVET EUROPEEN

(11) **EP 4 103 824 B1**
(45) Date de publication et mention de la délivrance du brevet: **22.05.2024**
(21) Numéro de dépôt: 21709457.2
(22) Date de dépôt: 04.02.2021
(51) Int. Cl.: F02B 19/02, F02B 19/12, F02B 19/16, F02P 13/00, F02P 15/00

(54) **PRECHAMBRE D'ALLUMAGE A CLAPET A SENS DE COMBUSTION INVERSE**
VENTILGESTEUERTE ZÜNDVORKAMMER MIT UMGEKEHRTER VERBRENNUNG
VALVE-CONTROLLED IGNITION PRE-CHAMBER WITH REVERSED COMBUSTION

(30) Priorité: 14.02.2020 FR 2001508
(43) Date de publication de la demande: 21.12.2022
(73) Titulaire: Rabhi, Vianney, 69006 Lyon (FR)
(72) Inventeur: Rabhi, Vianney, 69006 Lyon (FR)
(74) Mandataire: Vuillermoz, Bruno
(86) Numéro de dépôt international: PCT/FR2021/000009
(87) Numéro de publication internationale: WO 2021/160944

(56) Documents cités:
- EP-A1- 2 998 537
- EP-A2- 0 588 593
- FR-A1- 3 061 743

## Description

La présente invention a pour objet une préchambre d'allumage à clapet à sens de combustion inversé, prévue pour conférer un rendement énergétique élevé aux moteurs thermiques à combustion interne à allumage commandé.

La présente invention forme un perfectionnement de la préchambre d'allumage a' clapet objet de la demande de brevet FR 17 50264 du 12 janvier 2017, publiée le 13 juillet 2018 sous le numéro FR 3 061 743, et appartenant au demandeur. D'autres préchambres sont connues des documents EP 2 998 537 A1 et EP 0 588 593 A2.

L'objectif de ladite préchambre selon la demande FR 17 50264 est d'assurer la mise à feu d'une charge principale préalablement introduite dans la chambre de combustion d'un moteur thermique à combustion interne à allumage commandé.

Pour cela, ladite préchambre peut émettre des torches d'allumage dans ladite chambre de combustion. Lesdites torches produisent une forte turbulence sur leur passage tout en dégageant une importante quantité de chaleur.

Ce mode d'allumage permet de fortement diluer la charge principale à l'air ou aux gaz brûlés sans compromettre la qualité de combustion de ladite charge.

Diluer la charge principale permet d'augmenter le rendement moyen des moteurs à combustion interne, notamment car ces derniers génèrent alors moins de pertes par pompage à faibles charges. En outre, une fois diluée, la charge principale est en moyenne plus froide lors de sa combustion et cède moins de chaleur aux parois internes de la chambre de combustion. Enfin, lorsque ladite charge est diluée à l'air, le coefficient thermodynamique - qui est aussi appelé « coefficient gamma » - des gaz qui constituent ladite charge est plus favorable au rendement.

Si la charge principale est diluée avec des gaz d'échappement non-réactifs, la sensibilité au cliquetis du moteur est réduite. Il en résulte que le taux de compression dudit moteur peut être augmenté, ce qui augmente le rendement de ce dernier. Diluer la charge principale avec des gaz d'échappement permet également de la garder stoechio-métrique malgré la dilution, et de post traiter les oxydes d'azote produits par le moteur au moyen d'un catalyseur à trois voies connu en soi. Ceci est très avantageux au plan technico-économique car les dispositifs de post traitement des oxydes d'azotes opérant en excès d'oxygène sont complexes et coûteux.

L'objectif de la préchambre d'allumage a' clapet selon la demande FR 17 50264 est aussi de provoquer une combustion rapide de la charge principale. Brûler rapidement ladite charge est favorable au rendement du moteur thermique car une combustion isochore est théoriquement idéale, qui conduit à un rapport volumétrique de détente effectif maximal des gaz.

Une combustion rapide peut être obtenue de la préchambre d'allumage a' clapet selon la demande FR 17 50264 sans avoir à mettre la charge principale en mouvement lors de son introduction dans la chambre de combustion.

Les mouvements de la charge principale usuellement produits dans les chambres de combustion des moteurs à essence d'automobile sont connus sous les termes anglo-saxons de « tumble », de « swirl » et de « squish ». Ces mouvements garantissent qu'une turbulence résiduelle suffisante subsiste au moment du déclenchement de l'allumage par la bougie d'allumage et dans la zone de cette dernière, ladite turbulence étant indispensable à l'obtention d'une vitesse de combustion rapide de la charge principale.

Si lesdits mouvements augmentent effectivement la vitesse de combustion, ils présentent l'inconvénient de forcer les échanges de chaleur entre la charge principale et les parois internes de la chambre de combustion. Or, ces échanges nuisent au rendement des moteurs à combustion interne.

L'allumage par torches turbulentes de gaz chauds garantit une combustion rapide de la charge principale sans avoir à mettre en mouvement la charge principale. La turbulence générée par les torches d'allumage est intense, localisée et de courte vie, et ne force que très peu les échanges de chaleur entre la charge principale et les parois internes de la chambre de combustion.

Ceci constitue un avantage supplémentaire de l'allumage par préchambre à émission de torches turbulentes, ledit allumage étant plus favorable au rendement que celui par simple bougie d'allumage trouvé dans les moteurs thermiques automobiles à allumage commandé produits en grande série.

Les avantages qui viennent d'être décrits ne sont d'ailleurs pas exclusivement procurés par la préchambre d'allumage a' clapet selon la demande FR 17 50264, mais aussi par les préchambres d'allumage en général.

Lesdits avantages sont si importants que de nombreux programmes de recherche ont été consacrés aux préchambres d'allumage depuis le début du vingtième siècle, avec une intensification des programmes de recherche et développement dans les moteurs automobiles depuis les années soixante-dix.

Cependant, les préchambres développées jusqu'alors ne sont pas encore applicables aux moteurs automobiles produits en grande série.

C'est en cela que l'invention décrite dans la demande FR 17 50264 se distingue de l'art antérieur, car elle garantit une mise à feu de la charge principale régulière, précise et efficace, sur toute la plage de fonctionnement du moteur thermique à combustion interne à allumage commandé qui la reçoit. Ces conditions sont nécessaires pour pouvoir produire en grande série des moteurs automobiles à allumage par préchambre.

Pour atteindre ce résultat, la préchambre d'allumage à clapet décrite dans la demande FR 17 50264 comprend une cavité de stratification aménagée dans la culasse du moteur thermique à combustion interne. Ladite cavité est reliée par un conduit de stratification à la chambre de combustion dudit moteur.

La cavité de stratification reçoit d'une part, une bougie d'allumage connue en soi, et d'autre part, un injecteur de charge pilote qui peut injecter dans ladite cavité une charge pilote préalablement mise sous pression par des moyens de compression.

Ladite charge pilote est constituée d'un mélange comburant-carburant facilement inflammable, contrairement au mélange comburant-carburant qui forme la charge principale et qui, du fait de sa dilution à l'air ou aux gaz brûlés, est plus résistant à la combustion. La mise à feu de la charge pilote est déclenchée par un arc électrique produit par la bougie d'allumage.

L'invention de la demande de brevet FR 17 50264 se distingue de l'art antérieur principalement en ce qu'elle comprend un clapet de stratification qui, en fonction de sa position, soit obture le conduit de stratification, soit, ouvre ledit conduit pour former avec ce dernier une préchambre d'allumage par torche.

Lorsque le clapet de stratification forme ladite préchambre d'allumage par torche, cette dernière communique simultanément d'une part, avec la cavité de stratification, et d'autre part, avec la chambre de combustion du moteur thermique par l'intermédiaire d'orifices d'éjection des gaz.

Selon la demande de brevet FR 17 50264, la position du clapet de stratification est principalement asservie à la différence de pression entre celle régnant dans la cavité de stratification et celle régnant dans la chambre de combustion du moteur thermique à combustion interne.

Ainsi constituée, la préchambre d'allumage a' clapet de la demande de brevet FR 17 50264 résout de nombreux problèmes liés aux préchambres d'allumage.

En effet, les préchambres d'allumage passives ou actives selon l'art antérieur sont pour l'instant principalement réservées aux moteurs industriels de grosse cylindrée opérant à régime et charge fixes. Lesdites préchambres ne sont pas encore adaptées aux moteurs automobiles produits en grande série qui opèrent à régime et charge variables.

Pourtant, les préchambre d'allumage présentent un fort potentiel à réduire à bas prix de revient la consommation de carburant et les émissions de dioxyde de carbone des automobiles, et à répondre aux enjeux environnementaux et énergétiques du transport routier.

Aussi, c'est pour répondre au besoin identifié et néanmoins insatisfait de produire des moteurs automobiles à préchambre d'allumage, que la préchambre d'allumage a' clapet selon la demande de brevet FR 17 50264 présente les caractéristiques nécessaires à la mise en oeuvre efficace de l'allumage par préchambre dans les moteurs thermiques automobiles à allumage commandé qui notoirement, opèrent à régime et charge variables.

Le clapet de stratification qui caractérise ladite préchambre d'allumage a' clapet interdit notamment à la charge principale composée d'un mélange gazeux difficilement inflammable de se mélanger avec la charge pilote qui est constituée d'un mélange gazeux facilement inflammable. Ainsi, la charge pilote reste intègre et très inflammable, et peut en toutes circonstances assurer une combustion rapide et quasi-complète de la charge principale.

La charge pilote étant selon la demande de brevet FR 17 50264 pré-préparée avant d'être injectée à l'état gazeux dans la cavité de stratification par l'injecteur de charge pilote, il est possible de diluer la charge principale sans réserve avec de l'air et/ou des gaz brûlés tant que cela augmente le rendement du moteur thermique, ceci sans nuire à l'inflammabilité de la charge pilote.

Cet avantage décisif provient de ce que le clapet de stratification ferme le conduit de stratification et isole la cavité de stratification de la chambre de combustion du moteur pendant le remplissage en charge pilote de la préchambre d'allumage à clapet, puis forme, au moment d'allumer la charge principale, une préchambre d'allumage par torche pour émettre des torches d'allumage dans ladite chambre de combustion.

Cette intégrité préservée de la charge pilote est décisive pour en garantir la stabilité de combustion, ceci pour assurer en toutes circonstances que l'émission des torches d'allumage dans la chambre de combustion du moteur survient au moment opportun, avec une dispersion temporelle minimale d'un cycle à l'autre.

En outre, l'invention que décrit la demande de brevet FR 17 50264 permet de régler librement la quantité de charge pilote introduite par l'injecteur de charge pilote dans la cavité de stratification. Il est ainsi possible d'adapter la puissance des torches d'allumage émises au régime et à la charge du moteur à combustion interne et au taux de dilution de sa charge principale. Cette possibilité nouvelle permet de maximiser le rendement dudit moteur en toutes circonstances.

En conclusion, la préchambre d'allumage a' clapet objet de la demande de brevet N° 3 061 743 se distingue des préchambres d'allumage selon l'art antérieur en ce qu'elle assure une grande stabilité temporelle à l'allumage de la charge principale quel que soit le régime et à la charge du moteur thermique, la puissance dudit allumage étant librement réglable et adaptable au taux de dilution à l'air ou aux gaz d'échappement recirculés de la charge principale, et ce quel que soit le carburant liquide ou gazeux que consomme ledit moteur.

On note qu'à titre de perfectionnement, le clapet de stratification peut avantageusement être rappelé magnétiquement sur son siège par un aimant permanent ou un électroaimant, ceci en application de l'invention intitulée « dispositif de rappel magnétique de clapet » décrite dans la demande de brevet N°18 58111 du 10 septembre 2018 appartenant au demandeur.

Lorsqu'un électroaimant est prévu en application de ce qui précède, il devient possible premièrement, en fonction du régime du moteur thermique de rappeler ou non le clapet de stratification sur son siège d'obturation de clapet pour obturer ou non le conduit de stratification, et deuxièmement, de régler la force qui rappelle ledit clapet sur ledit siège.

Ce réglage de la force de rappel dudit clapet sur son siège permet notamment de garantir un démarrage à froid rapide du moteur thermique à allumage commandé qui reçoit la préchambre d'allumage a' clapet. Ceci constitue un progrès de première importance car un démarrage à froid problématique compte parmi les principaux freins à l'adoption des préchambres d'allumage sur les moteurs d'automobiles produits en grande série.

Régler la force qui rappelle le clapet de stratification sur son siège d'obturation permet notamment de régler la pression atteinte dans la préchambre d'allumage à clapet avant l'allumage de la charge pilote qu'elle contient.

Ce dernier réglage permet par exemple de ne pas dépasser la pression de vapeur saturante au-delà de laquelle une partie de l'essence que contient la charge pilote condense et retourne en phase liquide, au point que ladite charge ne peut plus être mise à feu par l'étincelle produite par la bougie d'allumage.

Garantir de ne pas dépasser ladite pression revient à garantir le démarrage du moteur thermique en toutes circonstances, et notamment à froid et basse température.

Le réglage de la force de rappel du clapet de stratification sur son siège d'obturation de clapet permet également d'introduire une charge pilote dans la préchambre d'allumage à clapet non plus via l'injecteur de charge pilote ce dernier demeurant fermé, mais via les orifices d'éjection des gaz, ladite charge pilote étant alors formée à partir des gaz constitutifs de la charge principale qui sont non-dilués durant cette phase.

Cette dernière stratégie permet notamment le redémarrage rapide du moteur thermique après un arrêt prolongé, notamment en permettant de se passer des moyens de compression décrits dans la demande de brevet FR 17 50264 durant les premières secondes suivant le démarrage dudit moteur, et ceci tant que lesdits moyens ne sont pas encore en mesure de délivrer la charge pilote dans la préchambre d'allumage à clapet.

Malgré les nombreux avantages de la préchambre d'allumage a' clapet selon la demande de brevet FR 17 50264, complétée ou non de son dispositif de rappel magnétique de clapet selon la demande de brevet N°18 58111, ladite préchambre présente l'inconvénient d'une architecture peu propice à la combustion complète de la charge pilote avant son éjection dans la chambre de combustion du moteur via les orifices d'éjection des gaz.

En effet, les contraintes géométriques d'implantation de la préchambre d'allumage a' clapet dans la culasse des moteurs à combustion interne imposent d'éloigner la bougie d'allumage des orifices d'éjection des gaz, ladite bougie se retrouvant le plus souvent positionnée à l'opposé desdits orifices. Ceci est d'autant plus vrai s'agissant des moteurs compacts utilisés en automobile.

Il résulte de cet agencement que lorsque la combustion de la charge pilote est déclenchée dans la cavité de stratification par la bougie d'allumage, une grande part de ladite charge est éjectée dans la chambre de combustion du moteur sous forme de gaz frais non encore brûlés et incapables de mettre à feu la charge principale.

Car en effet, dans la cavité de stratification, les gaz qui se trouvent à proximité de la bougie brûlent naturellement en premier. La température desdits gaz augmentant, leur volume augmente également tandis que décroît leur densité. L'expansion volumétrique desdits gaz chasse hors de la préchambre et via les orifices d'éjection des gaz les gaz non encore brûlés contenus dans le conduit de stratification et situés à proximité desdits orifices.

Il faut donc que la flamme se soit développée depuis la bougie jusqu'aux orifices d'éjection des gaz pour que soient enfin éjectés via lesdits orifices les premiers gaz chauds capables de mettre à feu la charge principale.

Finalement, seule une petite partie de la charge pilote qui résidait dans la préchambre d'allumage a' clapet au moment de sa mise à feu par la bougie d'allumage est expulsée de ladite préchambre sous forme de torches d'allumage constituées de gaz chauds aptes à mettre à feu la charge principale.

Si au contraire, la combustion débutait par les gaz situés à proximité des orifices d'éjection des gaz, l'intégralité de la charge pilote serait éjectée dans la chambre de combustion du moteur sous forme de gaz chauds, conférant à ladite charge une puissance d'allumage très supérieure. Mais ce n'est pas le cas.

Le caractère contreproductif du sens de combustion imposé par la position de la bougie d'allumage est très dommageable à l'efficacité d'allumage de la préchambre d'allumage à clapet selon la demande de brevet FR 17 50264.

Dans le contexte particulier de l'invention que décrit ladite demande, le fait que la bougie d'allumage soit par la force des choses située à l'opposé des orifices d'éjection des torches peut en effet conduire à une absence d'allumage de la charge principale dans la chambre de combustion du moteur.

Ceci peut notamment survenir si la charge pilote introduite dans la préchambre d'allumage se révèle insuffisante sans qu'il ne soit possible de l'augmenter vu le fonctionnement particulier du clapet de stratification et de l'injecteur de charge pilote avec lequel il coopère.

Car en effet, au moment de la mise à feu de la charge pilote, du fait du clapet de stratification, la pression de ladite charge pilote est plus basse que celle de la charge principale. De ce fait, pour que la préchambre d'allumage à clapet puisse émettre des torches d'allumage dans la chambre de combustion, il faut que consécutivement à la combustion de la charge pilote la pression régnant dans la cavité de stratification monte suffisamment pour atteindre puis dépasser la pression régnant dans la chambre de combustion du moteur.

Si à compter de ce dépassement une part trop importante des gaz constitutifs de la charge pilote est émise sous forme imbrûlée dans la chambre de combustion, il peut être impossible d'émettre dans ladite chambre des torches d'allumage chaudes formées de gaz brûlés portés à haute température.

Même si ce cas extrême n'est éventuellement pas atteint, dans tous les cas, le départ de la flamme initié par la bougie étant axialement positionné à l'opposé des orifices d'éjection des torches, la température moyenne des gaz éjectés dans la chambre de combustion du moteur se trouve diminuée, de même que l'écart de pression entre la préchambre et ladite chambre de combustion lors de l'éjection des torches d'allumage via lesdits orifices.

Les torches d'allumage produites sont de ce fait moins efficaces à pénétrer dans l'espace tridimensionnel de la chambre de combustion du moteur thermique, génèrent une turbulence locale de la charge principale moins élevée, et dégagent moins d'énergie calorifique d'allumage.

Un autre problème inhérent à la préchambre d'allumage à clapet selon la demande de brevet FR 17 50264 est le déséquilibre de puissance constaté entre les différentes torches d'allumage émises dans la chambre de combustion.

En effet, lors de la mise à feu de la charge pilote par la bougie d'allumage, vu l'exiguïté de la cavité de stratification et du conduit de stratification avec laquelle elle coopère, le développement de la combustion de la charge pilote à partir de la bougie d'allumage produit des hétérogénéités de température dans le conduit de stratification.

Lesdites hétérogénéités se traduisent par des écarts de température entre les torches d'allumage émises, et donc, par des écarts de viscosité des gaz émis d'une torche d'allumage à l'autre.

Lesdits écarts conduisent à des écarts de puissance notables entre les torches d'allumage émises, ce qui est défavorable à un développement harmonieux de la combustion dans la chambre de combustion du moteur.

En effet, certaines zones de la chambre de combustion se trouvent plus lentes à brûler que d'autres et donc, plus sensibles au cliquetis et plus productives de gaz imbrûlés et de polluants.

Ceci nuit tant au rendement du moteur thermique, qu'à sa propreté, ses émissions polluantes étant accrues du fait des déséquilibres qui viennent d'être décrits.

C'est pour remédier à ces inconvénients que la préchambre d'allumage à clapet à sens de combustion inversé selon l'invention tend principalement à inverser le sens de la propagation de la combustion dans la charge pilote afin qu'une part importante de ladite combustion démarre dans le conduit de stratification et au voisinage des orifices d'éjection des gaz, puis qui remonte vers la cavité de stratification, et ceci, sans remettre en cause la position de la bougie d'allumage.

C'est aussi pour homogénéiser les températures des différentes torches d'allumage émises dans la chambre de combustion que la préchambre d'allumage à clapet à sens de combustion inversé selon l'invention permet une combustion homogène de la charge pilote dans le conduit de stratification.

Ainsi, la préchambre d'allumage à clapet à sens de combustion inversé selon l'invention permet notamment :
- De limiter drastiquement la part de charge pilote émise par la préchambre d'allumage à clapet dans la chambre de combustion du moteur sous forme de gaz non encore brûlés ;
- D'augmenter la température moyenne des torches d'allumage émises par la préchambre d'allumage à clapet dans la chambre de combustion du moteur, et donc, d'augmenter l'efficacité desdites torches à mettre à feu la charge principale ;
- D'éliminer tout risque d'impossibilité de mettre à feu la charge principale au motif que le fonctionnement particulier du clapet de stratification et de l'injecteur de charge pilote rend impossible l'émission de torches d'allumage constituées de gaz chauds dans la chambre de combustion du moteur ;
- De réduire significativement la durée de combustion de la charge pilote dans la préchambre d'allumage à clapet, ce qui a notamment pour effet de réduire la quantité de chaleur exportée depuis les gaz chauds résultants de ladite combustion vers les parois internes de ladite préchambre ;
- A même quantité d'énergie contenue dans la charge pilote, d'augmenter la différence de pression entre la préchambre d'allumage à clapet et la chambre de combustion du moteur lors de la combustion de ladite charge pilote, et de rendre les torches d'allumage émises dans ladite chambre de combustion plus pénétrantes et plus turbulentes ;
- De réduire la quantité de charge pilote à injecter dans la préchambre d'allumage à clapet à même efficacité d'allumage de la charge principale ;
- D'équilibrer la puissance des torches d'allumage émises dans la chambre de combustion par la préchambre d'allumage par torche, notamment en limitant l'écart de température maximal survenant entre lesdites torches.

La préchambre d'allumage à clapet à sens de combustion inversé suivant l'invention est prévue peu chère à fabriquer en grande série, ceci pour rester compatible avec les contraintes économiques de la plupart des applications auxquelles elle se destine, y-compris automobiles.

Il est entendu que la préchambre d'allumage à clapet à sens de combustion inversé selon l'invention peut s'appliquer à tout moteur à combustion interne rotatif ou alternatif, quel qu'en soit le type, quel que soit le carburant gazeux, liquide ou solide qu'il consomme, et que sa charge principale soit diluée avec des gaz d'échappement préalablement refroidis ou non, avec un gaz neutre de quelque nature que ce soit, ou avec un gaz riche en oxygène ou en tout autre comburant.

Il est aussi entendu que la charge pilote prévue pour mettre à feu la charge principale de tout moteur à allumage commandé qui reçoit la préchambre d'allumage à clapet à sens de combustion inversé selon l'invention peut contenir un carburant et/ou un comburant différent du carburant et/ou comburant qui constitue ladite charge principale.

La préchambre d'allumage à clapet à sens de combustion inversé est prévue pour un moteur à combustion interne lequel comporte une culasse qui coiffe un cylindre pour former une chambre de combustion dans laquelle peut être brûlée une charge principale, ladite préchambre comprenant :
- Au moins une cavité de stratification qui est aménagée dans la culasse et qui est reliée à la chambre de combustion par un conduit de stratification ;
- Un injecteur de charge pilote qui débouche dans la cavité de stratification pour y injecter une charge pilote constituée d'un mélange comburant-carburant AF facilement inflammable ;
- Un clapet de stratification qui peut soit, obturer le conduit de stratification de sorte que ce dernier ne communique plus avec la chambre de combustion, soit, ouvrir ledit conduit pour former avec ce dernier une préchambre d'allumage par torche qui communique simultanément d'une part, avec la cavité de stratification via le conduit de stratification, et d'autre part, avec la chambre de combustion par l'intermédiaire d'au moins un orifice d'éjection des gaz pour émettre dans ladite chambre une torche d'allumage ;
- Au moins une enceinte d'inverseur logée dans la cavité de stratification, ladite enceinte laissant entre elle même et ladite cavité un volume de combustion tardive tandis qu'une charge pilote d'amorçage peut être introduite dans ladite enceinte ;
- Des moyens d'allumage qui débouchent à l'intérieur de l'enceinte d'inverseur pour mettre à feu la charge d'amorçage ;
- Au moins une buse d'éjection principale qui relie l'intérieur de l'enceinte d'inverseur avec l'intérieur de la cavité de stratification, ladite buse produisant lors de la combustion de la charge pilote d'amorçage une torche de pré-allumage qui peut pénétrer en tout ou partie dans le conduit de stratification, le volume balayé par ladite torche constituant un volume de combustion précoce.

La préchambre d'allumage à clapet à sens de combustion inversé suivant la présente invention comprend des moyens d'allumage qui sont constitués d'une électrode positive et d'une électrode négative d'une bougie d'allumage.

La préchambre d'allumage à clapet à sens de combustion inversé suivant la présente invention comprend une enceinte d'inverseur qui fait corps avec la bougie d'allumage.

La préchambre d'allumage à clapet à sens de combustion inversé suivant la présente invention comprend des moyens d'allumage qui sont constitués d'une électrode positive que présente une bougie d'allumage, la paroi interne de l'enceinte d'inverseur constituant une électrode négative.

La préchambre d'allumage à clapet à sens de combustion inversé suivant la présente invention comprend une plus petite distance existante entre la paroi interne de l'enceinte d'inverseur et l'électrode positive qui se situe au voisinage de la buse d'éjection principale.

La préchambre d'allumage à clapet à sens de combustion inversé suivant la présente invention comprend un intérieur d'enceinte d'inverseur qui forme une chambre annulaire.

La préchambre d'allumage à clapet à sens de combustion inversé suivant la présente invention comprend une buse d'éjection principale qui comporte, successivement et dans le sens de la sortie de l'enceinte d'inverseur, un convergent, un col et un divergent.

La préchambre d'allumage à clapet à sens de combustion inversé suivant la présente invention comprend une buse d'éjection principale qui se termine par un prolongateur de buse qui forme une protubérance pour prolonger la face externe de l'enceinte d'inverseur en direction du conduit de stratification.

La préchambre d'allumage à clapet à sens de combustion inversé suivant la présente invention comprend une buse d'éjection principale qui est excentrée par rapport à l'axe longitudinal de la cavité de stratification.

La préchambre d'allumage à clapet à sens de combustion inversé suivant la présente invention comprend une buse d'éjection principale qui est pleinement ou partiellement orientée tangentiellement à la paroi interne de la cavité de stratification.

La préchambre d'allumage à clapet à sens de combustion inversé suivant la présente invention comprend au moins une buse d'éjection secondaire qui met en communication l'intérieur de l'enceinte d'inverseur avec l'intérieur de la cavité de stratification, ladite buse pouvant émettre une torche secondaire de turbulence dans le volume de combustion tardive.

La préchambre d'allumage à clapet à sens de combustion inversé suivant la présente invention comprend une buse d'éjection secondaire qui est orientée approximativement tangentiellement à la paroi interne de la cavité de stratification.

La préchambre d'allumage à clapet à sens de combustion inversé suivant la présente invention comprend un volume interne de l'enceinte d'inverseur majoré du volume interne du conduit de stratification qui représente moins de la moitié du volume interne total que forment ensemble la cavité de stratification y-compris le volume interne de l'enceinte d'inverseur, et le conduit de stratification.

La préchambre d'allumage à clapet à sens de combustion inversé suivant la présente invention comprend un clapet de stratification qui est constitué d'un matériau magnétique tandis qu'une source de champ magnétique solidaire de la culasse produit un champ magnétique qui attire ledit clapet et tend à le maintenir plaqué contre l'extrémité du conduit de stratification pour obturer ce dernier.

La description qui va suivre en regard des dessins annexés et donnés à titre d'exemples non limitatifs permettra de mieux comprendre l'invention, les caractéristiques qu'elle présente, et les avantages qu'elle est susceptible de procurer :

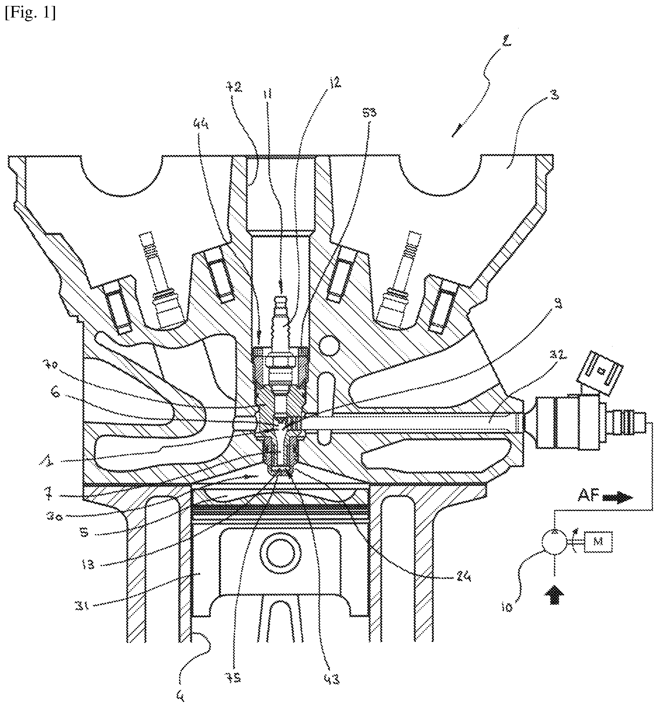

[fig.1] est une vue en coupe schématique de la préchambre d'allumage à clapet à sens de combustion inversé suivant l'invention telle que peut la recevoir un moteur à combustion interne, l'enceinte d'inverseur faisant corps avec la bougie d'allumage.

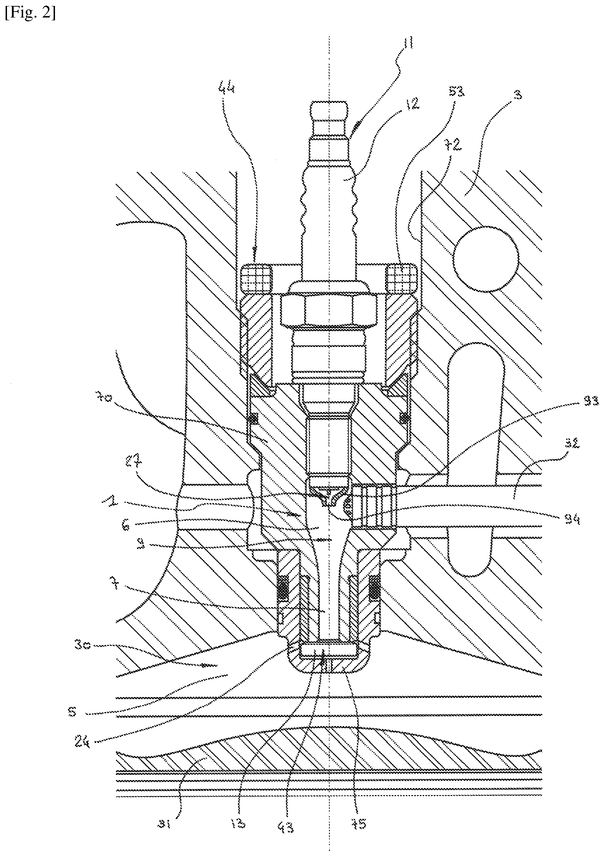

[fig.2] est une vue en coupe schématique rapprochée de la préchambre d'allumage à clapet à sens de combustion inversé suivant l'invention et selon la variante illustrée en figure 1, cadrée sur la bougie d'allumage, la cavité de stratification et le conduit de stratification.

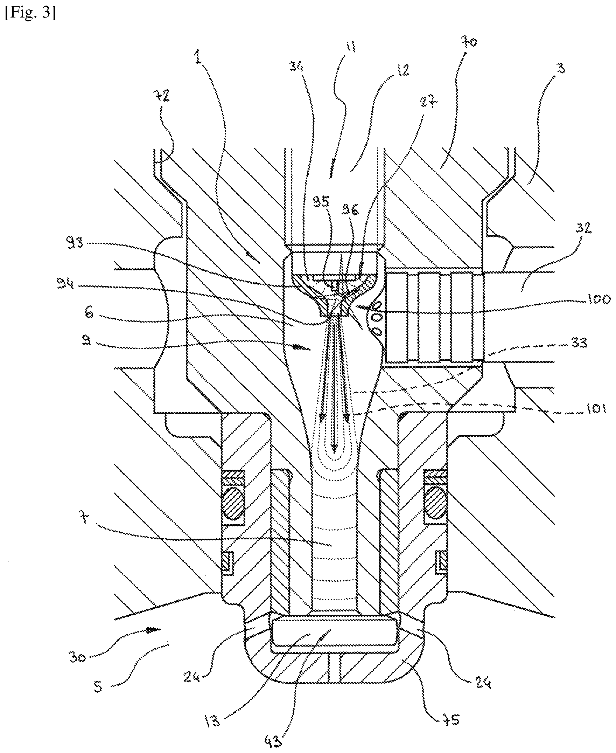

[fig.3] est une vue en coupe schématique rapprochée de la préchambre d'allumage à clapet à sens de combustion inversé suivant l'invention et selon la variante illustrée en figure 1, cadrée sur la bougie d'allumage, la cavité de stratification et le conduit de stratification, et qui illustre le fonctionnement de ladite préchambre d'allumage à clapet lors de la mise à feu par la bougie d'allumage de la charge pilote d'amorçage que contient l'enceinte d'inverseur.

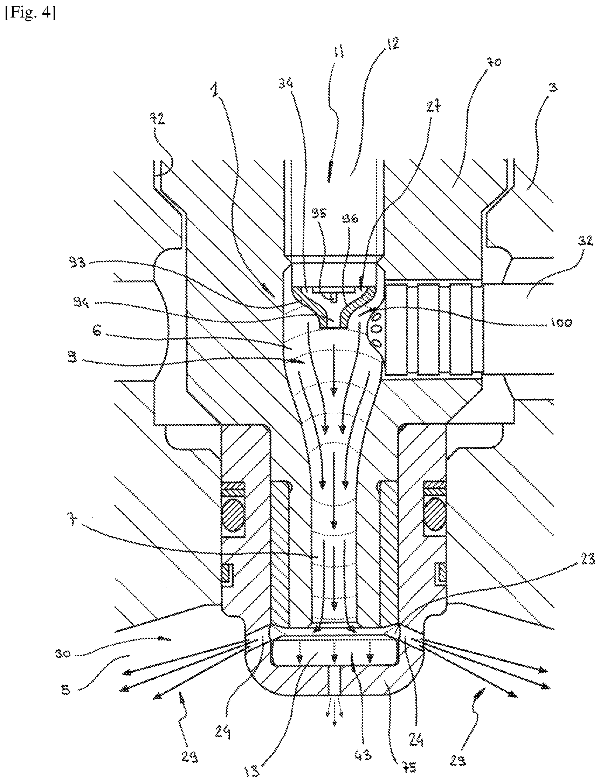

[fig.4] est une vue en coupe schématique rapprochée de la préchambre d'allumage à clapet à sens de combustion inversé suivant l'invention et selon la variante illustrée en figure 1, cadrée sur la bougie d'allumage, la cavité de stratification et le conduit de stratification, et qui illustre le fonctionnement de ladite préchambre d'allumage à clapet immédiatement après que la charge d'amorçage ait été pour partie éjectée hors de l'enceinte d'inverseur via la buse d'éjection, la combustion se propageant à l'ensemble de la charge pilote contenue dans la cavité de stratification et le conduit de stratification.

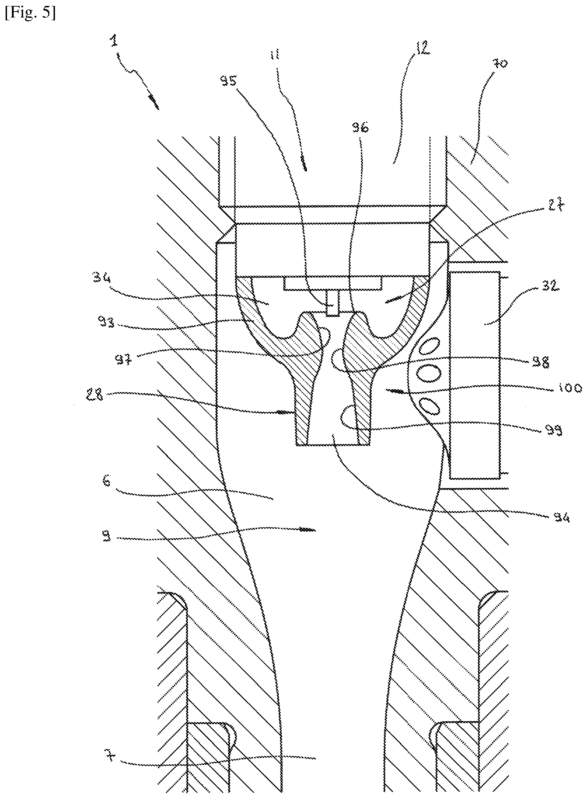

[fig.5] est une vue en coupe schématique rapprochée, cadrée sur l'enceinte d'inverseur, et qui montre une variante de la préchambre d'allumage à clapet à sens de combustion inversé suivant l'invention selon laquelle la buse d'éjection comporte un convergent, un col, et un divergent, et se termine par un prolongateur de buse qui forme une protubérance pour prolonger la face externe de l'enceinte d'inverseur en direction du conduit d'éjection des gaz.

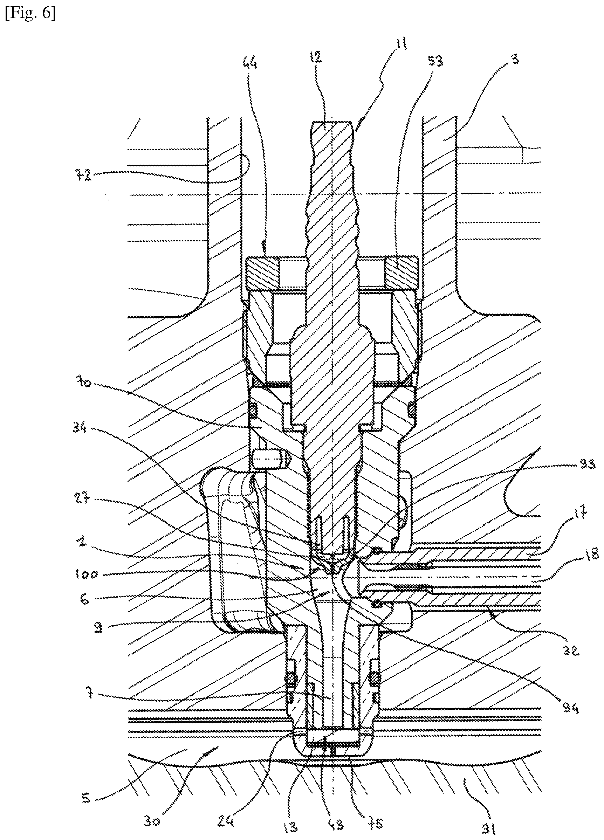

[fig.6] est une vue en coupe de la préchambre d'allumage à clapet à sens de combustion inversé suivant l'invention telle qu'elle peut équiper un moteur à combustion interne, ladite préchambre étant logée dans la culasse dudit moteur par l'intermédiaire d'un insert, l'enceinte d'inverseur faisant corps avec la bougie d'allumage, et le clapet de stratification étant maintenu plaqué contre l'extrémité du conduit d'éjection des gaz par un champ magnétique produit par un aimant permanent.

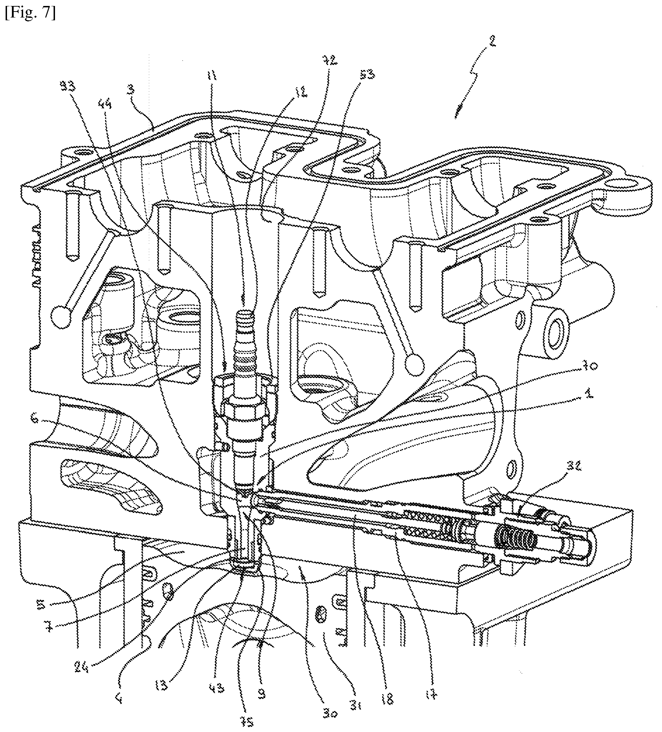

[fig.7] est une vue tridimensionnelle en coupe de la préchambre d'allumage à clapet à sens de combustion inversé suivant l'invention, selon la variante montrée en figure 6.

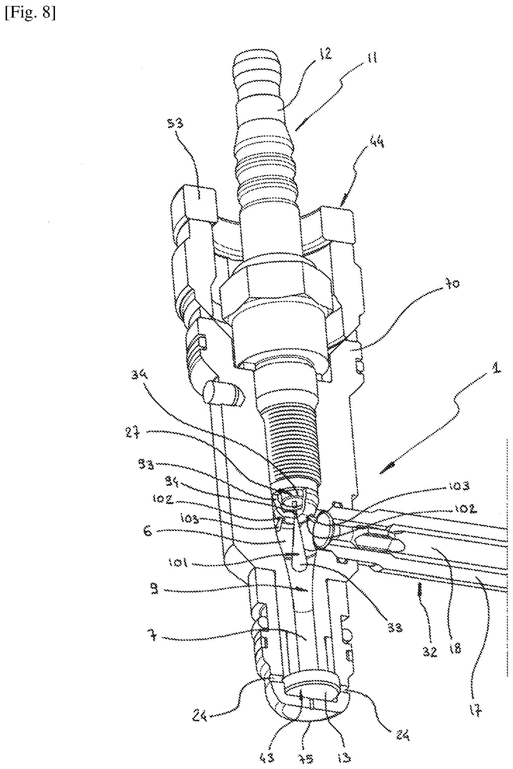

[fig.8] est une vue tridimensionnelle en coupe de l'insert montré en figure 6 qui reçoit notamment la bougie d'allumage et le clapet de stratification tandis que l'injecteur de charge pilote débouche dans la cavité de stratification aménagée dans ledit insert, la bougie d'allumage étant solidaire d'une enceinte d'inverseur montrée en écorché et qui comprend une buse d'éjection principale qui émet une torche de pré-allumage, et deux buses d'éjection secondaire qui émettent chacune une torche secondaire de turbulence.

### DESCRIPTION DE L'INVENTION :

On a montré en figures 1 à 8 la préchambre d'allumage à clapet à sens de combustion inversé 1 suivant l'invention, divers détails de ses composants, ses variantes, et ses accessoires.

Comme on le voit en figures 1 et 7, la préchambre d'allumage à clapet à sens de combustion inversé 1 suivant l'invention est hébergée dans une culasse 3 d'un moteur à combustion interne 2, ladite culasse 3 coiffant un cylindre 4 pour former avec un piston 31 une chambre de combustion 5.

Comme le montrent les figures 1 à 4 et les figures 6 et 7, une charge principale 30 peut être introduite chambre de combustion 5.

En figures 1 à 8 on a montré que la préchambre d'allumage à clapet à sens de combustion inversé 1 suivant l'invention comporte au moins une cavité de stratification 6 qui est aménagée dans la culasse 3 et qui est reliée à la chambre de combustion 5 par un conduit de stratification 7.

Les figures 1 à 8 montrent également qu'un injecteur de charge pilote 32 débouche dans la cavité de stratification 6 pour y injecter une charge pilote 9 constituée d'un mélange comburant-carburant AF facilement inflammable.

Les figures 1 à 4 et les figures 6 à 8 montrent que la préchambre d'allumage à clapet à sens de combustion inversé 1 suivant l'invention comprend un clapet de stratification 13 qui peut soit, obturer le conduit de stratification 7 de sorte que ce dernier ne communique plus avec la chambre de combustion 5, soit, ouvrir ledit conduit 7 pour former avec ce dernier une préchambre d'allumage par torche 23 qui communique simultanément d'une part, avec la cavité de stratification 6 via le conduit de stratification 7, et d'autre part, avec la chambre de combustion 5 par l'intermédiaire d'au moins un orifice d'éjection des gaz 24 pour émettre dans ladite chambre 5 une torche d'allumage 29.

[En figures 1 à 8 on distingue l'enceinte d'inverseur 93 de la préchambre d'allumage à clapet à sens de combustion inversé 1 suivant l'invention, ladite enceinte 93 étant logée dans la cavité de stratification 6 et laissant entre elle-même et ladite cavité 6 un volume de combustion tardive 100 tandis qu'une charge pilote d'amorçage 27 peut être introduite dans ladite enceinte 93.

On note qu'à titre de mode particulier de réalisation de la préchambre d'allumage à clapet à sens de combustion inversé 1 suivant l'invention, la charge pilote d'amorçage 27 peut être introduite dans l'enceinte d'inverseur 93 soit par la buse d'éjection principale 94 ladite charge 27 étant soustraite de la charge pilote 9 lors de son introduction dans ladite enceinte 93 par l'injecteur de charge pilote 32, soit par un injecteur de charge d'amorçage non-représenté qui peut injecter ladite charge 27 dans ladite enceinte 93 par exemple via un ou plusieurs orifices radiaux qui sont aménagés dans le culot de la bougie d'allumage 12 et qui sont reliés audit injecteur par un conduit, à l'instar du dispositif que décrit le brevet WO 2013/117857 A3 dont la demande originale française avait été faite par le demandeur.

On distingue en figures 1 à 8 des moyens d'allumage 11 que comprend la préchambre d'allumage à clapet à sens de combustion inversé 1 suivant l'invention, lesdits moyens 11 débouchant dans l'enceinte d'inverseur 93 pour mettre à feu la charge d'amorçage 27, et pouvant être constitués d'une bougie d'allumage 12, d'un faisceau laser, d'une source de micro-ondes ou de plasma, ou de tout type de moyen d'allumage 11 connu de l'homme de l'art.

En figures 1 à 8, on distingue également une buse d'éjection principale 94 que comprend la préchambre d'allumage à clapet à sens de combustion inversé 1 suivant l'invention, ladite buse 94 reliant l'intérieur de l'enceinte d'inverseur 93 avec l'intérieur de la cavité de stratification 6.

On remarque en figure 3 que lors de la combustion de la charge pilote d'amorçage 27, la buse d'éjection principale 94 produit une torche de pré-allumage 33 qui peut pénétrer en tout ou partie dans le conduit de stratification 7, le volume balayé par ladite torche 33 constituant un volume de combustion précoce 101.

A titre de variante, la buse d'éjection principale 94 peut être sensiblement excentrée par rapport à l'axe longitudinal du le conduit de stratification 7 pour diriger les gaz chauds résultants de la combustion de la charge pilote d'amorçage 27 indirectement dans ledit conduit 7. On note aussi qu'une ou plusieurs buses d'éjection principales 94 additionnelles peuvent être réalisées et orientées dans différentes autres directions.

On notera que selon un mode particulier de réalisation de la préchambre d'allumage à clapet à sens de combustion inversé 1 suivant l'invention, les moyens d'allumage 11 peuvent constitués d'une électrode positive 95 et d'une électrode négative 96 d'une bougie d'allumage 12.

A titre de mode particulier de réalisation de la préchambre d'allumage à clapet à sens de combustion inversé 1 suivant l'invention, l'électrode positive 95 et l'électrode négative 96 de la bougie d'allumage 12 peuvent être approximativement coplanaires à l'instar des électrode des bougies d'allumage à décharge semi-superficielle connues en soi.

Ceci permet que les gaz frais introduits dans l'enceinte d'inverseur 93 via la buse d'éjection principale 94 soient directement projetés sur lesdites électrodes 95, 96, et évite toute production d'étincelle entre l'électrode positive 95 et la paroi interne de l'enceinte d'inverseur 93.

On note qu'avantageusement et comme montré en figures 1 à 8, l'enceinte d'inverseur 93 peut faire corps avec la bougie d'allumage 12, ladite enceinte 93 étant rapportée sur le nez de ladite bougie 12 par vissage, soudage, sertissage ou par tout autre moyen de fixation connu de l'homme de l'art.

Les figures 1 à 8 montrent que les moyens d'allumage 11 peuvent être constitués d'une électrode positive 95 que présente une bougie d'allumage 12, la paroi interne de l'enceinte d'inverseur 93 constituant une électrode négative 96. En ce cas et à titre de variante de réalisation de la préchambre d'allumage à clapet à sens de combustion inversé 1 suivant l'invention, au moins un picot ou protubérance peut être prévu qui émerge de la paroi interne de l'enceinte d'inverseur 93 et qui est suffisamment proche de l'électrode positive 95 pour garantir que l'étincelle d'allumage survienne toujours entre ladite électrode positive 95 et ledit picot ou protubérance.

Les figures 1 à 8 montrent aussi qu'avantageusement, la plus petite distance existante entre la paroi interne de l'enceinte d'inverseur 93 et l'électrode positive 95 peut se situer au voisinage de la buse d'éjection principale 94 de sorte que lorsque un courant haute tension est appliqué à l'électrode positive 95, une étincelle est produite entre ladite électrode 95 et ledit voisinage, ce qui a pour effet d'engager la combustion de la charge pilote d'amorçage 27 au niveau dudit voisinage et de forcer la majorité des gaz constitutifs de la charge pilote d'amorçage 27 contenus dans l'enceinte d'inverseur 93 à brûler avant d'être expulsée hors de ladite enceinte 93 via la buse d'éjection principale 94.

Ainsi, la capacité de la charge pilote d'amorçage 27 à allumer la charge pilote 9 contenue dans la cavité de stratification 6 et dans le conduit de stratification 7 est accrue.

Selon un mode particulier de réalisation de la préchambre d'allumage à clapet à sens de combustion inversé 1 suivant l'invention, la paroi interne de l'enceinte d'inverseur 93 peut être partiellement recouverte d'un revêtement électriquement isolant pour éviter la formation d'une étincelle dans les zones situées hors du voisinage de la buse d'éjection principale 94. En ce cas, la plus petite distance existante entre la paroi interne de l'enceinte d'inverseur 93 et l'électrode positive 95 peut ne plus se situer au voisinage de la buse d'éjection principale 94.

En figures 1 à 8, on remarque que l'intérieur de l'enceinte d'inverseur 93 peut former une chambre annulaire 34 dont on imagine aisément qu'elle peut être toroïdale, en forme d'entonnoir, plus ou moins aplatie ou ventrue, ou de quelque forme de révolution que ce soit.

La figure 5 montre quant à elle que la buse d'éjection principale 94 peut comporter, successivement et dans le sens de la sortie de l'enceinte d'inverseur 93, un convergent 97, un col 98 et un divergent 99.

Cette configuration particulière permet d'accélérer les gaz constitutifs de la charge pilote d'amorçage 27 lors de leur éjection hors de l'enceinte d'inverseur 93 via la buse d'éjection principale 94, possiblement à une vitesse supersonique ce que ne permet pas un simple orifice, et permet de faire pénétrer lesdits gaz le plus profondément possible à l'intérieur du conduit de stratification 7.

En outre, la figure 5 montre que la buse d'éjection principale 94 peut se terminer par un prolongateur de buse 28 qui forme une protubérance pour prolonger la face externe de l'enceinte d'inverseur 93 en direction du conduit de stratification 7.

On constate que le prolongateur de buse 28 augmente le volume de combustion tardive 100 tout en réduisant le volume de combustion précoce 101, ceci en rapprochant la sortie de la buse d'éjection principale 94 du conduit de stratification 7, voire en introduisant plus ou moins profondément ladite sortie dans ledit conduit 7.

Cette configuration particulière de la préchambre d'allumage à clapet à sens de combustion inversé 1 suivant l'invention permet d'accroître l'efficacité de la torche de pré-allumage 33 à mettre à feu la part de charge pilote 9 contenue dans le conduit de stratification 7 avant celle non encore brûlée contenue dans la cavité de stratification 6.

On notera que selon la préchambre d'allumage à clapet à sens de combustion inversé 1 suivant l'invention, la buse d'éjection principale 94 peut être excentrée par rapport à l'axe longitudinal de la cavité de stratification 6 afin de produire un mouvement des gaz turbulent en forme de rouleau plus connu sous le terme anglo-saxon de « tumble », ledit mouvement survenant dans la cavité de stratification 6 lors de l'émission par ladite buse 94 de la torche de pré-allumage 33.

A titre de variante, la buse d'éjection principale 94 peut aussi être pleinement ou partiellement orientée tangentiellement à la paroi interne de la cavité de stratification 6 afin d'imprimer aux gaz qu'elle contient un mouvement turbulent en forme de tourbillon plus connu sous le terme anglo-saxon de « swirl », ledit mouvement survenant dans la cavité de stratification 6 lors de l'émission par la buse d'éjection principale 94 de la torche de pré-allumage 33.

Comme le montre la figure 8, au moins une buse d'éjection secondaire 102 peut être prévue qui met en communication l'intérieur de l'enceinte d'inverseur 93 avec l'intérieur de la cavité de stratification 6, ladite buse 102 pouvant émettre une torche secondaire de turbulence 103 dans le volume de combustion tardive 100 ce qui a pour effet d'accélérer la combustion de la part de charge pilote 9 contenue dans ledit volume 100.

La figure 8 montre d'ailleurs que la buse d'éjection secondaire 102 peut être orientée tangentiellement à la paroi interne de la cavité de stratification 6 ce qui a pour effet de produire un mouvement turbulent en forme de tourbillon plus connu sous le terme anglo-saxon de « swirl », ledit mouvement survenant d'une part, dans l'enceinte d'inverseur 93 lors de son remplissage en charge pilote d'amorçage 27 via la buse d'éjection secondaire 102, et d'autre part, dans la cavité de stratification 6 lorsque ladite buse 102 émet une torche secondaire de turbulence 103 dans ladite cavité 6.

On notera que selon la préchambre d'allumage à clapet à sens de combustion inversé 1 suivant l'invention, le volume interne de l'enceinte d'inverseur 93 majoré du volume interne du conduit de stratification 7 peut avantageusement représenter moins de la moitié du volume interne total que forment ensemble la cavité de stratification 6 y-compris le volume interne de l'enceinte d'inverseur 93, et le conduit de stratification 7.

Comme on le voit en figures 1, 2, 6, 7 et 8, le clapet de stratification 13 peut être constitué d'un matériau magnétique 43 tandis qu'une source de champ magnétique 44 solidaire de la culasse 3 produit un champ magnétique qui attire ledit clapet 13 et tend à le maintenir plaqué contre l'extrémité du conduit de stratification 7 pour obturer ce dernier.

A titre d'exemple non-limitatif représenté en figures 1, 2, 6, 7 et 8, la source de champ magnétique 44 peut être un aimant permanent 53, lequel peut d'ailleurs être avantageusement remplacé par un électroaimant piloté par un calculateur.

### FONCTIONNEMENT DE L'INVENTION :

Le fonctionnement de la préchambre d'allumage à clapet à sens de combustion inversé 1 selon l'invention se comprend aisément à la vue des figures 1 à 8 qui exposent des exemples de réalisation non-limitatifs de ladite invention.

Particulièrement en figures 1 et 7, on voit que la préchambre d'allumage à clapet à sens de combustion inversé 1 est aménagée dans une culasse 3 d'un moteur à combustion interne 2, ce dernier représentant le principal domaine d'application de ladite préchambre 1 selon l'invention.

En figures 1 et 7 on remarque que la culasse 3 coiffe un cylindre 4 pour former avec un piston 31 une chambre de combustion 5 dans laquelle peut être introduite une charge principale 30, tandis qu'une charge pilote 9 peut être introduite dans la cavité de stratification 6 par un injecteur de charge pilote 32.

En figure 4, on remarque que lorsque le clapet de stratification 13 a ouvert le conduit de stratification 7 pour former avec lui une préchambre d'allumage par torche 23, la cavité de stratification 6 communique avec la chambre de combustion 5 via ledit conduit 7 et via des orifices d'éjection des gaz 24 qui débouchent dans ladite chambre 5 par l'intermédiaire d'un nez de préchambre 75, ceci pour émettre des torches d'allumage 29 dans ladite chambre 5.

On remarque aussi en figures 1 à 8 que le clapet de stratification 13 est rappelé magnétiquement sur son siège par un aimant permanent 53 qui pourrait à titre de variante être remplacé par un électroaimant piloté par un calculateur.

En outre, les figures 1 à 8 montrent que la préchambre d'allumage à clapet à sens de combustion inversé 1 est logée dans la culasse 3 par l'intermédiaire d'un corps d'insert cylindrique 70 lui-même logé dans un puits d'insert 72 aménagé dans ladite culasse 3 et ceci, en application de l'invention décrite dans la demande de brevet français N° 1904961 en date du 13 mai 2019 relative à un insert d'allumage à préchambre active, ladite demande appartenant au demandeur.

En figures 6 à 8, on a montré un injecteur de charge pilote 32 qui est notamment constitué d'une buse d'injection tubulaire 17 dans laquelle est logée une soupape d'injection 18, ledit injecteur 32 tel que montré faisant partie d'un système d'injection hydraulique à came qui a fait l'objet de la demande de brevet français N° 1908158, en date du 18 juillet 2019, et appartenant au demandeur.

On remarque en figures 1 à 8 qu'à titre d'exemple de réalisation non-limitatif de la préchambre d'allumage à clapet à sens de combustion inversé 1 selon l'invention, les moyens d'allumage 11 sont constitués d'une bougie d'allumage 12.

En figures 1 à 8, on remarque que l'électrode positive 95 de la bougie d'allumage 12 coopère avec la paroi interne de l'enceinte d'inverseur 93 qui forme une électrode négative 96, une étincelle d'allumage pouvant être produite entre lesdites électrodes 95, 96.

A la vue des figures 1 à 8 on comprend l'objectif de la préchambre d'allumage à clapet à sens de combustion inversé 1 selon l'invention qui est de garantir qu'une part significativement majoritaire de la charge pilote 9 ait brûlé dans la cavité de stratification 6 et le conduit de stratification 7 avant d'être éjectée dans la chambre de combustion 5 sous la forme de torches d'allumage 29 constituées de gaz chauds animés d'une forte turbulence.

Autrement dit, la préchambre d'allumage à clapet à sens de combustion inversé 1 garantit que la charge pilote 9 soit éjectée dans la chambre de combustion 5 principalement sous la forme de torches d'allumage 29 constituées de gaz brûlés portés à haute température, et non de gaz frais non encore brûlés incapables de mettre à feu la charge principale 30.

Car en effet, la préchambre d'allumage à clapet à sens de combustion inversé 1 selon l'invention permet d'atteindre le résultat qui vient d'être exposé malgré la position défavorable de la bougie d'allumage 12 qui, du fait des différentes contraintes d'implantation de la cavité de stratification 6 et du conduit de stratification 7 dans le moteur à combustion interne 2, se trouve très éloignée des orifices d'éjection des gaz 24.

Sans l'enceinte d'inverseur 93 que comporte entre autres organes la préchambre d'allumage à clapet à sens de combustion inversé 1 selon l'invention, la combustion de la charge pilote 9 se développerait dans la cavité de stratification 6 en partant de l'étincelle créée par la bougie d'allumage 12, couche de gaz après couche de gaz, en progressant graduellement dans le volume interne de ladite cavité 6 puis dans celui du conduit de stratification 7, et ceci jusqu'à atteindre les orifices d'éjection des gaz 24.

Il résulterait de ce sens de développement de la combustion qu'une grande partie de la charge pilote 9 serait expulsée dans la chambre de combustion 5 sous la forme de torches d'allumage 29 par trop constituées de gaz frais non-encore brûlés qui n'ont aucun pouvoir de mise à feu de la charge principale 30.

En conséquence, en l'absence de la configuration particulière de la préchambre d'allumage à clapet à sens de combustion inversé 1 selon l'invention, il serait nécessaire de compenser la trop faible puissance d'allumage des torches d'allumage 29 émises dans la chambre de combustion 5.

Cette compensation pourrait se faire par exemple en augmentant le volume interne total que forment ensemble la cavité de stratification 6 et le conduit de stratification 7. Toutefois, ledit volume deviendrait plus difficile à remplir avec la quantité requise de charge pilote 9, car le temps laissé à l'injecteur de charge pilote 32 pour réaliser un tel remplissage est court, particulièrement dans le cas des moteurs automobiles tournant à grande vitesse.

Ladite compensation pourrait aussi se faire en injectant davantage de charge pilote 9 dans la même cavité de stratification 6 au moyen de l'injecteur de charge pilote 32. Toutefois, outre la difficulté à remplir ladite cavité 6 dans le temps imparti, voire l'impossibilité de remplir ladite cavité 6 du fait d'une ouverture trop précoce du clapet de stratification 13, cette stratégie serait coûteuse en énergie car il faudrait préalablement que les moyens de compression 10 pré-compriment une quantité de charge pilote 9 plus importante. Ceci se ferait au détriment du rendement total du moteur à combustion interne 2, qui serait sensiblement diminué.

C'est pour éviter de recourir aux compensations qui viennent d'être exposées lesquelles dégradent le rendement du moteur à combustion interne 2, que la préchambre d'allumage à clapet à sens de combustion inversé 1 selon l'invention est prévue pour maximiser la part de la charge pilote 9 qui est éjectée via les orifices d'éjection des gaz 24 sous la forme de torches d'allumage 29 constituées de gaz brûlés, seuls ces gaz portés à haute température étant capables de mettre à feu la charge principale 30.

C'est pour atteindre ce résultat que la préchambre d'allumage à clapet à sens de combustion inversé 1 comprend une enceinte d'inverseur 93 dans laquelle peut être introduite une charge pilote d'amorçage 27, ladite enceinte 93 étant logée à l'intérieur de la cavité de stratification 6 pour former entre elle-même et ladite cavité 6 un volume de combustion tardive 100.

Comme on peut aisément le déduire des figures 1 à 8, la charge pilote d'amorçage 27 est constituée lors de l'introduction par l'injecteur de charge pilote 32 de la charge pilote 9 dans la cavité de stratification 6.

En effet, la charge pilote d'amorçage 27 résulte du transfert d'une partie de la charge pilote 9 depuis la cavité de stratification 6 vers l'intérieur de l'enceinte d'inverseur 93 via la buse d'éjection principale 94 qui relie ledit intérieur avec l'espace laissé entre la paroi extérieure de ladite enceinte 93 et l'intérieur de la cavité de stratification 6.

On remarque en figures 1 à 4 et en figures 6 à 8 que l'enceinte d'inverseur 93 est positionnée au voisinage de l'extrémité axiale de la cavité de stratification 6 qui est située à l'opposé du nez de préchambre 75.

On note aussi en figures 1 à 8 que la bougie d'allumage 12 débouche à l'intérieur de l'enceinte d'inverseur 93.

On remarque en figures 1 à 8 que la buse d'éjection principale 94 est orientée en direction du conduit de stratification 7 pour introduire en tout ou partie une torche de pré-allumage 33 à l'intérieur dudit conduit 7, le volume balayé par ladite torche 33 formant un volume de combustion précoce 101.

Ainsi, consécutivement à la mise à feu de la charge pilote d'amorçage 27 par la bougie d'allumage 12, comme l'illustre la figure 3, des gaz chauds constitutifs de ladite charge 27 sont éjectés à grande vitesse de l'enceinte d'inverseur 93, via la buse d'éjection principale 94, sous la forme d'une torche de pré-allumage 33, et en direction de l'intérieur du conduit de stratification 7.

En se développant, la torche de pré-allumage 33 forme le volume de combustion précoce 101 constitué de gaz brûlés portés à haute température.

Lorsque la torche de pré-allumage 33 atteint l'intérieur du conduit de stratification 7, les gaz frais constitutifs de la charge pilote 9 contenus dans ledit conduit 7 brûlent et ceci, avant même que la part de charge pilote 9 contenue dans le volume de combustion tardive 100 n'ait eu le temps de le faire.

L'éjection en direction du conduit de stratification 7 de la torche de pré-allumage 33 par la buse d'éjection principale 94 consécutive à la mise à feu de la charge pilote d'amorçage 27, et la combustion graduelle de la charge pilote 9 couche par couche qui en résulte en direction des orifices d'éjection des gaz 24, sont symbolisées en figure 3 par des traits en pointillés, les flèches symbolisant l'écoulement des gaz.

La combustion étant engagée dans le conduit de stratification 7, ladite combustion continue de se propager dans ledit conduit 7 jusqu'à atteindre les orifices d'éjection des gaz 24. La torche de pré-allumage 33 émise par la buse d'éjection principale 94 étant parfaitement centrée dans le conduit de stratification 7, la combustion de la part de charge pilote 9 contenue dans ledit conduit 7 est homogène.

Ainsi, aucun orifice d'éjection des gaz 24 ne reçoit de gaz en moyenne plus chauds ou plus froids que les autres orifices d'éjection des gaz 24 avec lesquels il coopère.

En outre, le débit d'aucun orifice d'éjection des gaz 24 n'est augmenté ou diminué en comparaison de celui des autres orifices d'éjection des gaz 24 avec lesquels il coopère par un écoulement des gaz décentré par rapport au conduit de stratification 7.

Ces particularités garantissent que les torches d'allumage 29 émises dans la chambre de combustion 5 sont effectivement identiques

En parallèle de la combustion en direction des orifices d'éjection des gaz 24, montrée en figure 3, la combustion se propage en « marche arrière » en direction de l'enceinte d'inverseur 93 comme le montre la figure 4, de sorte à brûler la part de charge pilote 9 qui est contenue dans le volume de combustion tardive 100. La propagation de ladite combustion est également symbolisée en figure 4 par des traits en pointillés, les flèches symbolisant l'écoulement des gaz.

Ainsi, selon l'exemple qui vient d'être donné, le sens de la combustion de la charge pilote 9 dans le volume que forment ensemble la cavité de stratification 6 et le conduit de stratification 7 a bien été inversé ce qui est l'objectif de la préchambre d'allumage à clapet à sens de combustion inversé 1 selon l'invention.

Ce faisant, outre une combustion très rapide de la charge pilote 9 provoquée par la torche de pré-allumage 33, une part importante des gaz qui constituent ladite charge pilote 9 a été éjectée dans la chambre de combustion 5, via les orifices d'éjection des gaz 24, et sous la forme de torches d'allumage 29 dont la puissance et la composition sont homogènes d'une torche 29 à l'autre. Lesdites torches 29 étant constituées de gaz brûlés portés à haute température, elles ont été pleinement efficaces à mettre à feu la charge principale 30.

On notera toutefois que d'éjecter une partie de la charge pilote 9 dans la chambre de combustion 5 sous la forme de gaz frais peut présenter des avantages. En effet, lesdits gaz peuvent former un couloir de gaz frais hautement inflammable dans la charge principale 30 lorsque cette dernière est par exemple constituée d'un mélange gazeux difficilement inflammable car fortement dilué à l'air ou aux gaz d'échappement recirculés.

Ce mode de stratification de la charge principale 30 peut effectivement aider à augmenter le rendement de combustion du moteur à combustion interne 2.

Aussi, selon la préchambre d'allumage à clapet à sens de combustion inversé 1 suivant l'invention, la part de la charge pilote 9 éjectée dans la chambre de combustion 5 sous la forme de gaz brûlés portés à haute température via les torches d'allumage 29 peut être réglée en jouant sur l'orientation de la buse d'éjection principale 94 par rapport au conduit de stratification 7, et/ou en jouant sur la géométrie de ladite buse 94 pour qu'elle émette une torche de pré-allumage 33 angulairement plus ou moins ouverte.

En outre, l'importance du volume de combustion précoce 101 relativement à celle du volume de combustion tardive 100 peut être réglée en jouant sur la longueur de la buse d'éjection principale 94, et plus précisément sur la longueur d'un prolongateur de buse 28 qui peut être adjoint à ladite buse 94 comme le montre la figure 5.

En effet, plus le prolongateur de buse 28 rapproche la sortie de la buse d'éjection principale 94 du conduit de stratification 7, voire fait pénétrer ladite sortie dans ledit conduit 7, plus le volume de combustion tardive 100 tend à être grand par rapport au volume de combustion précoce 101.

Une variante de réalisation de la préchambre d'allumage à clapet à sens de combustion inversé 1 suivant l'invention peut consister en prévoir une ou plusieurs buses d'éjection secondaires 102, en plus de la buse d'éjection principale 94, et comme montré en figure 8.

Sur ladite figure 8, l'enceinte d'inverseur 93 comporte deux buses d'éjection secondaires 102 de diamètre sensiblement inférieur à celui de la buse d'éjection principale 94. Les deux dites buses 102 sont excentrées par rapport à l'axe longitudinal de la cavité de stratification 6, positionnées diamétralement à l'opposé l'une de l'autre, et émettent chacune une torche secondaire de turbulence 103 dans le volume de combustion tardive 100.

Les deux dites buses 102 sont également orientées quasiment radialement relativement à l'axe longitudinal de la cavité de stratification 6, et tangentiellement à la paroi interne de cette dernière.

Il résulte de cette configuration particulière de la préchambre d'allumage à clapet à sens de combustion inversé 1 suivant l'invention que lors du transfert d'une partie de la charge pilote 9 depuis la cavité de stratification 6 vers l'intérieur de l'enceinte d'inverseur 93 pour constituer la charge pilote d'amorçage 27, un mouvement tourbillonnaire est réalisé à l'intérieur de ladite enceinte 93 qui favorise une combustion rapide de la charge pilote d'amorçage 27.

Ensuite, lorsque consécutivement à sa mise à feu par la bougie d'allumage 12 la charge pilote d'amorçage 27 est émise dans le volume de combustion tardive 100 sous forme de torches secondaires de turbulence 103 par chacune des buses d'éjection secondaires 102, ledit volume 100 est lui aussi mis à feu cependant qu'il est également soumis à un mouvement tourbillonnaire.

Cet agencement particulier de la préchambre d'allumage à clapet à sens de combustion inversé 1 suivant l'invention tel que montré en figure 8 permet d'éviter que la combustion de la part de charge pilote 9 que contient le volume de combustion tardive 100 ne participe que trop tardivement à l'émission des torches d'allumage 29 dans la chambre de combustion 5.

On notera que l'exemple de réalisation de la préchambre d'allumage à clapet à sens de combustion inversé 1 selon l'invention qui vient d'être décrit est non-limitatif.

On notera aussi que la préchambre d'allumage à clapet à sens de combustion inversé 1 selon l'invention peut s'appliquer à d'autres domaines que celui des moteurs à combustion interne, tels que celui des cloueurs à gaz, des armes à feu, ou de tous autres appareils nécessitant la mise à feu d'une charge principale au moyen d'une charge pilote avec la meilleure efficacité possible.

## Revendications

1. Préchambre d'allumage à clapet à sens de combustion inversé (1) pour moteur à combustion interne (2) lequel comporte une culasse (3) qui coiffe un cylindre (4) pour former une chambre de combustion (5) dans laquelle peut être brûlée une charge principale (30), **caractérisée en ce qu'**elle comprend :
• Au moins une cavité de stratification (6) qui est aménagée dans la culasse (3) et qui est reliée à la chambre de combustion (5) par un conduit de stratification (7) ;
• Un injecteur de charge pilote (32) qui débouche dans la cavité de stratification (6) pour y injecter une charge pilote (9) constituée d'un mélange comburant-carburant AF facilement inflammable ;
• Un clapet de stratification (13) qui peut soit, obturer le conduit de stratification (7) de sorte que ce dernier ne communique plus avec la chambre de combustion (5), soit, ouvrir ledit conduit (7) pour former avec ce dernier une préchambre d'allumage par torche (23) qui communique simultanément d'une part, avec la cavité de stratification (6) via le conduit de stratification (7), et d'autre part, avec la chambre de combustion (5) par l'intermédiaire d'au moins un orifice d'éjection des gaz (24) pour émettre dans ladite chambre (5) une torche d'allumage (29) ;
• Au moins une enceinte d'inverseur (93) logée dans la cavité de stratification (6), ladite enceinte (93) laissant entre elle même et ladite cavité (6) un volume de combustion tardive (100) tandis qu'une charge pilote d'amorçage (27) peut être introduite dans ladite enceinte (93) ;
• Des moyens d'allumage (11) qui débouchent à l'intérieur de l'enceinte d'inverseur (93) pour mettre à feu la charge d'amorçage (27) ;
• Au moins une buse d'éjection principale (94) qui relie l'intérieur de l'enceinte d'inverseur (93) avec l'intérieur de la cavité de stratification (6), ladite buse (94) produisant lors de la combustion de la charge pilote d'amorçage (27) une torche de pré-allumage (33) qui peut pénétrer en tout ou partie dans le conduit de stratification (7), le volume balayé par ladite torche (33) constituant un volume de combustion précoce (101).

2. Préchambre d'allumage à clapet à sens de combustion inversé suivant la revendication 1, **caractérisée en ce que** les moyens d'allumage (11) sont constitués d'une électrode positive (95) et d'une électrode négative (96) d'une bougie d'allumage (12).

3. Préchambre d'allumage à clapet à sens de combustion inversé suivant la revendication 2, **caractérisée en ce que** l'enceinte d'inverseur (93) fait corps avec la bougie d'allumage (12).

4. Préchambre d'allumage à clapet à sens de combustion inversé suivant la revendication 1, **caractérisée en ce que** les moyens d'allumage (11) sont constitués d'une électrode positive (95) que présente une bougie d'allumage (12), la paroi interne de l'enceinte d'inverseur (93) constituant une électrode négative (96).

5. Préchambre d'allumage à clapet à sens de combustion inversé suivant la revendication 4, **caractérisée en ce que** la plus petite distance existante entre la paroi interne de l'enceinte d'inverseur (93) et l'électrode positive (95) se situe au voisinage de la buse d'éjection principale (94).

6. Préchambre d'allumage à clapet à sens de combustion inversé suivant la revendication 1, **caractérisée en ce que** l'intérieur de l'enceinte d'inverseur (93) forme une chambre annulaire (34).

7. Préchambre d'allumage à clapet à sens de combustion inversé suivant la revendication 1, **caractérisée en ce que** la buse d'éjection principale (94) comporte, successivement et dans le sens de la sortie de l'enceinte d'inverseur (93), un convergent (97), un col (98) et un divergent (99).

8. Préchambre d'allumage à clapet à sens de combustion inversé suivant la revendication 1, **caractérisée en ce que** la buse d'éjection principale (94) se termine par un prolongateur de buse (28) qui forme une protubérance pour prolonger la face externe de l'enceinte d'inverseur (93) en direction du conduit de stratification (7).

9. Préchambre d'allumage à clapet à sens de combustion inversé suivant la revendication 1, **caractérisée en ce que** la buse d'éjection principale (94) est excentrée par rapport à l'axe longitudinal de la cavité de stratification (6).

10. Préchambre d'allumage à clapet à sens de combustion inversé suivant la revendication 9, **caractérisée en ce que** la buse d'éjection principale (94) est pleinement ou partiellement orientée tangentiellement à la paroi interne de la cavité de stratification (6).

11. Préchambre d'allumage à clapet à sens de combustion inversé suivant la revendication 1, **caractérisée en ce qu'**au moins une buse d'éjection secondaire (102) met en communication l'intérieur de l'enceinte d'inverseur (93) avec l'intérieur de la cavité de stratification (6), ladite buse (102) pouvant émettre une torche secondaire de turbulence (103) dans le volume de combustion tardive (100).

12. Préchambre d'allumage à clapet à sens de combustion inversé suivant la revendication 11, **caractérisée en ce que** la buse d'éjection secondaire (102) est orientée approximativement tangentiellement à la paroi interne de la cavité de stratification (6).

13. Préchambre d'allumage à clapet à sens de combustion inversé suivant la revendication 1, **caractérisée en ce que** le volume interne de l'enceinte d'inverseur (93) majoré du volume interne du conduit de stratification (7) représente moins de la moitié du volume interne total que forment ensemble la cavité de stratification (6) y-compris le volume interne de l'enceinte d'inverseur (93), et le conduit de stratification (7).

14. Préchambre d'allumage à clapet à sens de combustion inversé suivant la revendication 1, **caractérisée en ce que** le clapet de stratification (13) est constitué d'un matériau magnétique (43) tandis qu'une source de champ magnétique (44) solidaire de la culasse (3) produit un champ magnétique qui attire ledit clapet (13) et tend à le maintenir plaqué contre l'extrémité du conduit de stratification (7) pour obturer ce dernier.

## Patentansprüche

1. Zündvorkammer mit Ventil, dessen Brennrichtung umgekehrt ist (1), für einen Verbrennungsmotor (2), der einen Zylinderkopf (3) aufweist, welcher auf einem Zylinder (4) sitzt, um eine Brennkammer (5) zu bilden, in welcher ein Hauptbeschickungsgut (30) verbrannt werden kann, **dadurch gekennzeichnet, dass** sie Folgendes umfasst:
• mindestens einen Schichtbildungshohlraum (6), der im Zylinderkopf (3) vorgesehen ist, wobei er über eine Schichtbildungsleitung (7) mit der Brennkammer (5) verbunden ist;
• einen Pilotbeschickungsgut-Injektor (32), welcher in den Schichtbildungshohlraum (6) einmündet, um dort ein Pilotbeschickungsgut (9) einzuspritzen, welches aus einer leichtentzündlichen Oxidationsmittel/Brennstoff-Mischung AF besteht;
• ein Schichtbildungsventil (13), das entweder die Schichtbildungsleitung (7) derart verschließen kann, dass diese nicht mit auch der Brennkammer (5) in Verbindung steht, oder die Leitung (7) öffnen kann, um mit dieser eine Vorkammer zum Zünden mittels Brenner (23) zu bilden, welche gleichzeitig einerseits über die Schichtbildungsleitung (7) mit dem Schichtbildungshohlraum (6) und andererseits über mindestens eine Gasabführungsöffnung (24) mit der Brennkammer (5) in Verbindung steht, um zu bewirken, dass ein Zündbrenner (29) in die Kammer (5) reicht;
• mindestens einen Umkehrhohlraum (93), welcher sich in dem Schichtbildungshohlraum (6) befindet, wobei der Hohlraum (93) zwischen ihm selbst und dem Hohlraum (6) ein Volumen für eine spätere Verbrennung (100) belässt, während ein Pilotbeschickungsgut zum Erstzünden (27) in den Hohlraum (93) eingeleitet werden kann;
• Zündmittel (11), die ins Innere des Umkehrhohlraums (93) einmünden, um das Erstzündungsbeschickungsgut (27) zu entflammen;
• mindestens eine Hauptauslassdüse (94), welche das Innere des Umkehrhohlraums (93) mit dem Inneren des Schichtbildungshohlraums (6) verbindet, wobei die Düse (94) beim Verbrennen des Pilotbeschickungsguts zum Erstzünden (27) als Vorzündungsbrenner (33) wirkt, der vollständig oder teilweise in die Schichtbildungsleitung (7) eindringen kann, wobei das Volumen, welches von dem Brenner (33) bestrichen wird, ein Volumen für eine frühe Verbrennung (101) darstellt.

2. Zündvorkammer mit Ventil, dessen Brennrichtung umgekehrt ist, gemäß Anspruch 1, **dadurch gekennzeichnet, dass** die Zündmittel (11) aus einer positiven Elektrode (95) und einer negativen Elektrode (96) einer Zündkerze (12) bestehen.

3. Zündvorkammer mit Ventil, dessen Brennrichtung umgekehrt ist, gemäß Anspruch 2, **dadurch gekennzeichnet, dass** der Umkehrhohlraum (93) einstückig mit der Zündkerze (12) ausgebildet ist.

4. Zündvorkammer mit Ventil, dessen Brennrichtung umgekehrt ist, gemäß Anspruch 1, **dadurch gekennzeichnet, dass** die Zündmittel (11) aus einer positiven Elektrode (95) bestehen, mit welcher eine Zündkerze (12) versehen ist, wobei die Innenwand des Umkehrhohlraums (93) eine negative Elektrode (96) darstellt.

5. Zündvorkammer mit Ventil, dessen Brennrichtung umgekehrt ist, gemäß Anspruch 4, **dadurch gekennzeichnet, dass** der geringste Abstand, welcher zwischen der Innenwand des Umkehrhohlraums (93) und der positiven Elektrode (95) besteht, sich in der Nähe der Hauptauslassdüse (94) befindet.

6. Zündvorkammer mit Ventil, dessen Brennrichtung umgekehrt ist, gemäß Anspruch 1, **dadurch gekennzeichnet, dass** der Umkehrhohlraum (93) eine ringförmige Kammer (34) bildet.

7. Zündvorkammer mit Ventil, dessen Brennrichtung umgekehrt ist, gemäß Anspruch 1, **dadurch gekennzeichnet, dass** die Hauptauslassdüse (94), nacheinander und ab dem Ausgang des Umkehrhohlraums (93), eine Verengungsdüse (97), ein Engstück (98) und eine Erweiterungsdüse (99) aufweist.

8. Zündvorkammer mit Ventil, dessen Brennrichtung umgekehrt ist, gemäß Anspruch 1, **dadurch gekennzeichnet, dass** die Hauptauslassdüse (94) in einem Düsenverlängerer (28) endet, welcher einen Vorsprung bildet, um die Außenseite des Umkehrhohlraums (93) in Richtung der Schichtbildungsleitung (7) zu verlängern.

9. Zündvorkammer mit Ventil, dessen Brennrichtung umgekehrt ist, gemäß Anspruch 1, **dadurch gekennzeichnet, dass** die Hauptauslassdüse (94) außerhalb der Längsachse des Schichtbildungshohlraums (6) liegt.

10. Zündvorkammer mit Ventil, dessen Brennrichtung umgekehrt ist, gemäß Anspruch 9, **dadurch gekennzeichnet, dass** die Hauptauslassdüse (94) vollständig oder teilweise tangential zur Innenwand des Schichtbildungshohlraums (6) ausgerichtet ist.

11. Zündvorkammer mit Ventil, dessen Brennrichtung umgekehrt ist, gemäß Anspruch 1, **dadurch gekennzeichnet, dass** mindestens eine Hilfsauslassdüse (102) das Innere des Umkehrhohlraums (93) mit dem Inneren des Schichtbildungshohlraums (6) verbindet, wobei die Düse (102) derart wirken kann, dass ein Turbulenzhilfsbrenner (103) in das Volumen für eine spätere Verbrennung (100) reicht.

12. Zündvorkammer mit Ventil, dessen Brennrichtung umgekehrt ist, gemäß Anspruch 11, **dadurch gekennzeichnet, dass** die Hilfsauslassdüse (102) näherungsweise tangential zur Innenwand des Schichtbildungshohlraums (6) ausgerichtet ist.

13. Zündvorkammer mit Ventil, dessen Brennrichtung umgekehrt ist, gemäß Anspruch 11, **dadurch gekennzeichnet, dass** das Innenvolumen des Umkehrhohlraums (93), zuzüglich des Innenvolumens der Schichtbildungsleitung (7), mindestens die Hälfte des Gesamtinnenvolumens ausmacht, welches der Schichtbildungshohlraum (6) einschließlich des Innenvolumens des Umkehrhohlraums (93) und die Schichtbildungsleitung (7) gemeinsam bilden.

14. Zündvorkammer mit Ventil, dessen Brennrichtung umgekehrt ist, gemäß Anspruch 1, **dadurch gekennzeichnet, dass** das Schichtbildungsventil (13) aus einem magnetischen Material (43) besteht, während eine Magnetfeldquelle (44), die fest mit dem Zylinderkopf (3) verbunden ist, ein Magnetfeld erzeugt, welches das Ventil (13) anzieht und dazu neigt, dieses gegen das Ende der Schichtbildungsleitung (7) zu drücken, um die letztere zu verschließen.

## Claims

1. A valve ignition prechamber (1) with a reversed direction of combustion for an internal combustion engine (2) which has a cylinder head (3) which covers a cylinder (4) to form a combustion chamber (5) in which can be burned a main charge (30), **characterized in that** it comprises:
• At least one lamination cavity (6) which is arranged in the cylinder head (3) and which is connected to the combustion chamber (5) by a lamination duct (7);
• A pilot charge injector (32) which opens into the lamination cavity (6) to inject therein a pilot charge (9) consisting of an easily flammable Combustive agent-AF fuel mixture;
• A lamination valve (13) which can either close the lamination duct (7) so that the latter no longer communicates with the combustion chamber (5), or open said duct (7) to form with the latter a torch-ignition prechamber (23) which simultaneously communicates, on the one hand, with the lamination cavity (6) via the lamination duct (7) and, on the other hand, with the combustion chamber (5) via at least one gas ejection orifice (24) to emit an ignition torch (29) into said chamber (5);
• At least one inverter housing (93) housed in the lamination cavity (6), said housing (93) forming between itself and said cavity (6) a late combustion volume (100) while an ignition pilot charge (27) can be introduced into said housing (93);
• Ignition means (11) that open inside the inverter housing (93) to ignite the ignition charge (27);
• At least one main ejection nozzle (94) which connects the inside of the inverter housing (93) with the inside of the lamination cavity (6), said nozzle (94) producing during the combustion of the ignition pilot charge (27) a pre-ignition torch (33) which can penetrate in whole or in part into the lamination duct (7), the volume swept by said torch (33) constituting an early combustion volume (101).

2. The valve ignition prechamber with a reversed direction of combustion according to claim 1, **characterized in that** the ignition means (11) consists of a positive electrode (95) and a negative electrode (96) of an ignition spark plug (12).

3. The valve ignition prechamber with a reversed direction of combustion according to claim 2, **characterized in that** the inverter housing (93) is integral with the spark plug (12).

4. The valve ignition prechamber with a reversed direction of combustion according to claim 1, **characterized in that** the ignition means (11) consist of a positive electrode (95) of a spark plug (12), the inner wall of the inverter housing (93) constituting a negative electrode (96).

5. The valve ignition prechamber with a reversed direction of combustion according to Claim 4, **characterized in that** the smallest distance existing between the inner wall of the inverter housing (93) and the positive electrode (95) is located in the vicinity of the main ejection nozzle (94).

6. The valve ignition prechamber with a reversed direction of combustion according to claim 1, **characterized in that** the inside of the inverter housing (93) forms an annular chamber (34).

7. The valve ignition prechamber with a reversed direction of combustion according to claim 1, **characterized in that** the main ejector nozzle (94) comprises, successively and in the direction of the outlet of the inverter housing (93), a convergent (97), a throat (98) and a divergent (99).

8. The valve ignition prechamber with a reversed direction of combustion according to claim 1, **characterized in that** the main ejection nozzle (94) ends with a nozzle extender (28) which forms a protrusion to extend the outer face of the inverter housing (93) in the direction of the lamination duct (7).

9. The valve ignition prechamber with a reversed direction of combustion according to claim 1, **characterized in that** the main ejector nozzle (94) is eccentric relative to the longitudinal axis of the lamination cavity (6).

10. The valve ignition prechamber with a reversed direction of combustion according to claim 9, **characterized in that** the main ejection nozzle (94) is fully or partially oriented tangentially to the inner wall of the lamination cavity (6).

11. The valve ignition prechamber with a reversed direction of combustion according to claim 1, **characterized in that** at least one secondary ejection nozzle (102) connects the inside of the inverter housing (93) with the inside of the lamination cavity (6), said nozzle (102) being capable to emit a secondary turbulence torch (103) into the late combustion volume (100).

12. The valve ignition prechamber with a reversed direction of combustion according to claim 11, **characterized in that** the secondary ejection nozzle (102) is oriented approximately tangentially to the inner wall of the lamination cavity (6).

13. The valve ignition prechamber with a reversed direction of combustion according to claim 1, **characterized in that** the internal volume of the inverter housing (93) plus the internal volume of the lamination duct (7) is less than half of the total internal volume formed together by the lamination cavity (6), including the internal volume of the inverter housing (93), and the lamination duct (7).

14. The valve ignition prechamber with a reversed direction of combustion according to claim 1, **characterized in that** the lamination valve (13) is made of a magnetic material (43) while a magnetic field source (44) integral with the cylinder head (3) produces a magnetic field which attracts said valve (13) and tends to keep it pressed against the end of the lamination duct (7) to close the latter.
